(19) Europäisches Patentamt
European Patent Office
Office européen des brevets

(11) EP 3 346 539 A1

(12) # EUROPEAN PATENT APPLICATION
published in accordance with Art. 153(4) EPC

(43) Date of publication:
**11.07.2018 Bulletin 2018/28**

(21) Application number: **16841848.1**

(22) Date of filing: **30.08.2016**

(51) Int Cl.:
***H01M 10/0567** (2010.01)* ***H01G 11/06** (2013.01)*
***H01G 11/60** (2013.01)* ***H01G 11/62** (2013.01)*
***H01G 11/64** (2013.01)* ***H01M 10/052** (2010.01)*
***H01M 10/0568** (2010.01)* ***H01M 10/0569** (2010.01)*

(86) International application number:
**PCT/JP2016/075323**

(87) International publication number:
**WO 2017/038816 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.08.2015 JP 2015171505**
**09.11.2015 JP 2015219955**

(71) Applicants:
- **Sekisui Chemical Co., Ltd.**
  **Osaka-shi, Osaka 530-8565 (JP)**
- **Kyoto University**
  **Kyoto-shi, Kyoto 606-8501 (JP)**
- **Kosen National Institute of Technology**
  **Hachioji-shi, Tokyo 193-0834 (JP)**

(72) Inventors:
- **KOBAYASHI Takayuki**
  **Tsukuba-shi**
  **Ibaraki 300-4292 (JP)**
- **HEISHI Masaru**
  **Tsukuba-shi**
  **Ibaraki 300-4292 (JP)**
- **TOYOKAWA Takuya**
  **Tsukuba-shi**
  **Ibaraki 300-4292 (JP)**
- **KANOH Masashi**
  **Tsukuba-shi**
  **Ibaraki 300-4292 (JP)**
- **TSUJII Yoshinobu**
  **Kyoto-shi**
  **Kyoto 606-8501 (JP)**
- **SAKAKIBARA Keita**
  **Kyoto-shi**
  **Kyoto 606-8501 (JP)**
- **SATO Takaya**
  **Tsuruoka-shi**
  **Yamagata 997-8511 (JP)**
- **MORINAGA Takashi**
  **Tsuruoka-shi**
  **Yamagata 997-8511 (JP)**
- **SHOMURA Ryo**
  **Tsuruoka-shi**
  **Yamagata 997-8511 (JP)**

(74) Representative: **Müller-Boré & Partner Patentanwälte PartG mbB**
**Friedenheimer Brücke 21**
**80639 München (DE)**

(54) **ELECTROLYTE SOLUTION AND LITHIUM ION SECONDARY BATTERY**

(57) An electrolyte solution comprising: a non-aqueous solvent; a lithium salt; at least one fluorine-containing compound selected from the group consisting of a fluorine-containing ether compound represented by formula (1) and a fluorine-containing carbonate compound represented by formula (2); and at least one of an ionic liquid represented by formula (3) and an ionic liquid represented by formula (4).

EP 3 346 539 A1

FIG. 1

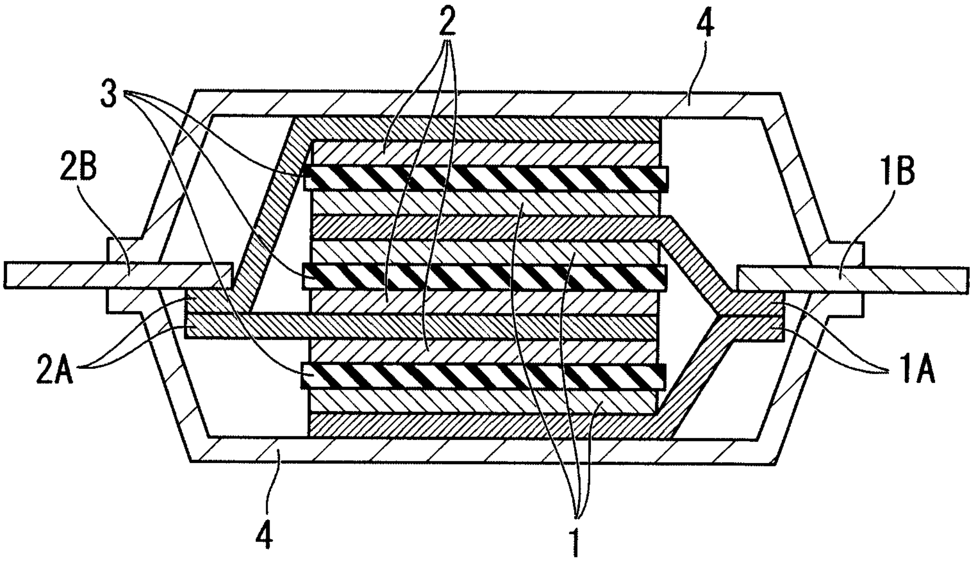

## Description

Technical Field

The present invention relates to an electrolytic liquid and a lithium-ion secondary battery including the same. Priorities are claimed on Japanese Patent Application No. 2015-171505, filed August 31, 2015, and Japanese Patent Application No. 2015-219955, filed November 9, 2015, the contents of which are incorporated herein by reference.

Background Art

With the rapid expansion of the market for laptop computers, mobile phones and electric vehicles, demand for secondary batteries with high energy density is growing. The means for obtaining secondary batteries with high energy density that are currently being developed include, for example, a method using an anode material having a large capacity, and a method using a cathode having a high electrical potential. In many cases, the voltages of general lithium-ion secondary batteries are in the range of from 3.5 to 4.2 V. However, lithium-ion secondary batteries with cathode having a high electrical potential have a voltage of 4.5 V or more; therefore, it is expected that the energy density of such lithium-ion secondary batteries will be improved. It is also conceivable that the use of such a cathode in combination with an anode having a larger capacity will further enhance the increase of the capacity of the batteries.
However, the use of a cathode having a high electrical potential leads to a problem of lowering of battery performance due to the decomposition of an electrolyte solution. As a method for suppressing the decomposition of the electrolyte solution, for example, a method is known in which an aliphatic compound having 1-propenyloxy group or the like is added to the electrolyte solution (see, for example, Patent Document 1).

Citation List

Patent Literature

Patent Document 1: Japanese Unexamined Patent Application Publication No. 2013-26180

Summary of Invention

Problems to be Solved by the Invention

However, when the aliphatic compound disclosed in Patent Document 1 is used as an additive for a lithium ion secondary battery, a problem arises in that the secondary battery suffers a drastic decrease of capacity through the repetition of charge/discharge cycle.
The present invention has been made in view of the above situation, and the objects of the present invention are to provide an electrolyte solution which can suppress the decrease of capacity of a lithium-ion secondary battery due to the repetition of charge/discharge cycle as compared to the conventional batteries even when the working voltage is set at 4.5 V or higher, and to provide a lithium-ion secondary battery using such an electrolyte solution.

Means to Solve the Problems

The present inventors have made extensive and intensive studies with a view toward solving the above problems. As a result, they have found that a specific electrolyte solution can suppress the capacity decrease of a lithium-ion secondary battery occurring through the repetition of charge/discharge cycle as compared to the conventional batteries even when the working voltage is set at 4.5 V or higher, wherein the specific electrolyte solution includes: a lithium salt; at least one fluorine-containing compound selected from the group consisting of a fluorine-containing ether compound and a fluorine-containing carbonate compound; an ionic liquid. The present invention has been completed based on this finding.

[1] An electrolyte solution comprising: a lithium salt; at least one fluorine-containing compound selected from the group consisting of a fluorine-containing ether compound represented by formula (1) below and a fluorine-containing carbonate compound represented by formula (2) below (which may, hereinafter, also be referred to simply as "fluorine compound"); at least one of an ionic liquid represented by formula (3) below and an ionic liquid represented by formula (4) below (which may, hereinafter, also be referred to simply as "ionic liquid"):

$$R^1\text{-O-}R^2 \qquad (1)$$

wherein $R^1$ represents a fluoroalkyl group having 3 to 8 carbon atoms and at least 6 fluorine atoms, and $R^2$ represents a fluoroalkyl group selected from the group consisting of $-CF_3$, $-CHF_2$ and $-CH_2F$;

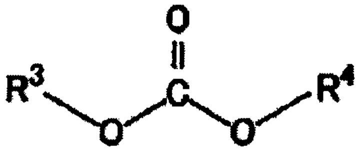

(2)

wherein $R^3$ represents a fluoroalkyl group having 1 to 3 carbon atoms and at least one fluorine atom, and $R^4$ represents an alkyl group having 1 to 3 carbon atoms or a fluoroalkyl group having 1 to 3 carbon atoms and at least one fluorine atom;

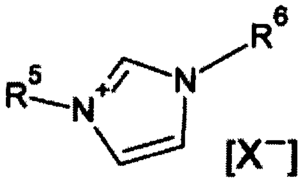

(3)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and $R^5$ and $R^6$ each independently represents a hydrogen atom or a hydrocarbon group having 1 to 18 carbon atoms; and

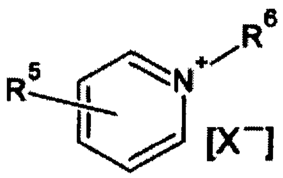

(4)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and each of $R^5$ and $R^6$ independently represents a hydrogen atom or a hydrocarbon group having 1 to 18 carbon atoms, and is located at any of ortho, meta and para positions when $R^5$ is a hydrocarbon group.

[2] The electrolyte solution according to [1], wherein the amount of the at least one fluorine-containing compound is 0.5 to 60 % by volume, based on the total volume of the electrolyte solution.

[3] The electrolyte solution according to [1], wherein the amount of the at least one fluorine-containing compound is 0.5 to 60 % by mass, based on the total mass of the electrolyte solution.

[4] The electrolyte solution according to [1] or [2], wherein the amount of the ionic liquid is 0.1 to 10 % by volume, based on the total volume of the electrolyte solution.

[5] The electrolyte solution according to [1] or [3], wherein the amount of the ionic liquid is 0.1 to 10 % by mass, based on the total mass of the electrolyte solution.

[6] The electrolyte solution according to any one of [1] to [5], wherein the non-aqueous solvent is a mixed solvent including at least two of ethylene carbonate, dimethyl carbonate, diethyl carbonate, and ethyl methyl carbonate.

[7] The electrolyte solution according to any one of [1] to [6], wherein the fluorine-containing ether compound is 1,1,2,3,3,3-hexafluoropropyl difluoromethyl ether.

[8] The electrolyte solution according to any one of [1] to [7], wherein the fluorine-containing ether compound is 2,2-difluoroethyl ethyl carbonate.

[9] The electrolyte solution according to any one of [1] to [8], wherein the ionic liquid is represented by the formula (4), wherein $R^5$ is a hydrogen atom or a methyl group.

[10] The electrolyte solution according to any one of [1] to [9], wherein the ionic liquid is represented by the formula (4), wherein the hydrocarbon group $R^5$ is an ortho-substituent.

[11] The electrolyte solution according to any one of [1] to [10], wherein the ionic liquid is represented by the formula

(4), wherein $R^6$ is a hydrogen atom or a hydrocarbon group having 4 to 6 carbon atoms.
[12] A lithium-ion secondary battery including the electrolyte solution of any one of [1] to [11].

Effect of the Invention

The present invention can suppress the capacity decrease of a lithium-ion secondary battery occurring through the repetition of charge/discharge cycle as compared to the conventional batteries even when the working voltage is set at 4.5 V or higher. Further, according to the lithium-ion secondary battery of the present invention, since the decrease of capacity of the battery due to the repetition of charge/discharge cycle is suppressed as compared to the conventional batteries even when the battery is used at a high voltage, i.e., 4.5 V or higher, the battery can be used repeatedly as a high energy density secondary battery over a long period of time as compared to the conventional batteries.

Brief Description of Drawing

FIG. 1 is a schematic cross-sectional view showing the construction of an electrode element of a lithium-ion secondary battery of a stacked laminate type.

Description of the Embodiments

The embodiments of the electrolyte solution and lithium-ion secondary battery of the present invention are described below.
Further, these embodiments are intended to provide specific explanations to make the purport of the invention more readily understandable, and are not intended to limit the present invention unless specifically indicated otherwise.

⟨⟨Electrolyte Solution⟩⟩

The electrolyte solution of the first embodiment of the present invention includes: a non-aqueous solvent; a lithium salt; at least one fluorine-containing compound selected from the group consisting of a fluorine-containing ether compound represented by formula (1) below and a fluorine-containing carbonate compound represented by formula (2) below; at least one of an ionic liquid represented by formula (3) below and an ionic liquid represented by formula (4) below:

$$R^1\text{-O-}R^2 \quad (1)$$

wherein $R^1$ represents a fluoroalkyl group having 3 to 8 carbon atoms and at least 6 fluorine atoms, and $R^2$ represents a fluoroalkyl group selected from the group consisting of $-CF_3$, $-CHF_2$ and $-CH_2F$;

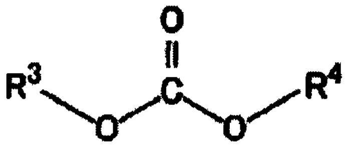

(2)

wherein $R^3$ represents a fluoroalkyl group having 1 to 3 carbon atoms and at least one fluorine atom, and $R^4$ represents an alkyl group having 1 to 3 carbon atoms or a fluoroalkyl group having 1 to 3 carbon atoms and at least one fluorine atom;

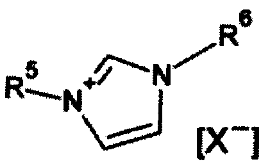

(3)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and $R^5$ and $R^6$ each independently represents a hydrogen atom or a hydrocarbon group having 1 to 18 carbon atoms; and

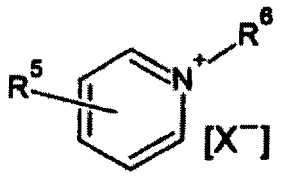

(4)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and each of $R^5$ and $R^6$ independently represents a hydrogen atom or a hydrocarbon group having 1 to 18 carbon atoms, and is located at any of ortho, meta and para positions when $R^5$ is a hydrocarbon group.

<Non-aqueous Solvent>

The non-aqueous solvent contained in the electrolyte solution of the present embodiment is preferably a solvent which can dissolve a lithium salt used as a supporting salt, and can stably dissolve at least one fluorine-containing compound selected from the group consisting of a fluorine-containing ether compound represented by the formula (1) and a fluorine-containing carbonate compound represented by the formula (2); and at least one of an ionic liquid represented by the formula (3) and an ionic liquid represented by the formula (4).

Examples of such organic solvents include carbonate compounds such as ethylene carbonate (EC), propylene carbonate (PC), vinylene carbonate (VC), butylene carbonate, dimethyl carbonate (DMC), ethyl methyl carbonate (EMC), and diethyl carbonate (DEC); fluorine-containing carbonic ester compounds in each of which at least any one of the hydrogen atoms of the aforementioned carbonic ester compound is substituted with a fluorine atom, such as monofluoroethylene carbonate (FEC); carboxylic ester compounds such as $\gamma$-butyrolactone, ethyl formate, ethyl acetate, and ethyl propionate; sulfonic ester compounds such as 1,3-propane sultone; ether compounds such as tetrahydrofuran, and 1,2-dimethoxyethane; nitrile compounds such as acetonitrile; and sulfone compounds such as sulfolane.

With respect to the aforementioned organic solvent, a single type thereof may be used individually or two or more types thereof may be used in combination.

The non-aqueous solvent preferably includes at least two types of the aforementioned carbonic ester compounds, and is more preferably a mixed solvent including ethylene carbonate (EC) and at least one solvent selected from the group consisting of dimethyl carbonate (DMC), diethyl carbonate (DEC), and ethyl methyl carbonate (EMC), and still more preferably a mixed solvent including ethylene carbonate (EC) and diethyl carbonate (DEC).

The mixing ratio of the solvents contained in the mixed solvent can be set in view of the solubilities of the aforementioned lithium salt, fluorine-containing compound and ionic liquid, and the stability of the mixed solvents.

In a mixed solvent including ethylene carbonate (EC) and diethyl carbonate (DEC), the volume ratio of EC : DEC is preferably 10:90 to 90:10, more preferably 20:80 to 50:50, and still more preferably 30:70 to 40:60.

<Lithium salt>

As the lithium salt to be contained in the electrolyte solution of this embodiment, for example, any of those generally used in known lithium-ion secondary batteries can be used. Specific examples of the lithium salt include lithium hexafluorophosphate ($LiPF_6$), lithium tetrafluoroborate ($LiBF_4$), lithium bis(fluorosulfonyl)imide ($LiN(SO_2F)_2$, LiFSI), and lithium bis(trifluoromethanesulfonyl)imide ($LiN(SO_2CF_3)_2$, LiTFSI). With respect to the lithium salt, a single type thereof may be used individually or two or more types thereof may be used in combination.

The amount of the lithium salt (based on the total amount of the electrolyte solution of the present embodiment) is not particularly limited and, for example, may be appropriately adjusted so as to give a lithium salt concentration of preferably 0.2 to 3.0 mol/L and more preferably 0.4 to 2.0 mol/L.

<Fluorine-containing ether compound>

In the general formula (I), $R^1$ is a linear, branched or cyclic fluoroalkyl group. For improving the miscibility in the non-aqueous solvent, $R^1$ is preferably a linear or branched fluoroalkyl group and is more preferably a linear fluoroalkyl group.

For improving the solubility of the fluorine-containing ether compound in the non-aqueous solvent, the number of carbon atoms constituting the fluoroalkyl group represented by $R^1$ is preferably 3 to 6, is more preferably 3 or 5, and still more preferably 3 or 4.

The fluoroalkyl group represented by $R^1$ has at least 6 fluorine atoms. The upper limit of the number of fluorine

atoms of $R^1$ is not particularly limited and may be appropriately set depending on the carbon number of the fluoroalkyl group and the like, but at least one hydrogen atom is preferably left unsubstituted by fluorine. That is, $R^1$ has preferably at least 1 hydrogen atom.

The fluoroalkyl group represented by $R^2$ is a fluoroalkyl group selected from the group consisting of -$CF_3$, -$CHF_2$ and -$CH_2F$, is preferably either one of -$CHF_2$ or -$CH_2F$.

As a more preferable example of the fluorine-containing ether compounds represented by the formula (1), there can be mentioned a compound represented by the following formula (5):

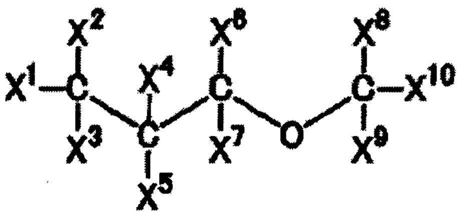

**(5)**

wherein each of $X^1$ to $X^{10}$ represents a hydrogen atom or a fluorine atom, with the proviso that at least 6 of $X^1$ to $X^7$ are fluorine atoms, and at least one of $X^8$ to $X^{10}$ is a fluorine atom.

In the formula (5), it is preferred that any one of $X^4$ to $X^7$ is a hydrogen atom, and it is more preferred that $X^4$ or $X^5$ is a hydrogen atom.

In the formula (5), it is preferred that any one or two of $X^8$ to $X^{10}$ are hydrogen atoms, and it is more preferred that any one of $X^8$ to $X^{10}$ is a hydrogen atom.

As a more preferable example of the fluorine-containing ether compounds represented by the formula (1), there can be mentioned a compound represented by the following formulae (6-1) to (6-6), among which 1,1,2,3,3,3-hexafluoropropyl difluoromethyl ether represented by the formula (6-1) is especially preferred:

**$OF_3$-CHF-$CF_2$-O-$CHF_2$ (6-1)**

**$OF_3$-$CF_2$-CHF-O-$CHF_2$ (6-2)**

**$OF_3$-CHF-$CF_2$-O-$CH_2F$ (6-3)**

**$CF_3$-$CF_2$-CHF-O-$CH_2F$ (6-4)**

**$CF_3$-CHF-$CF_2$-O-$CF_3$ (6-5)**

**$CF_3$-$CF_2$-CHF-O-$CF_3$ (6-6)**

The fluorine-containing ether compound contained in the electrolyte solution of this embodiment may be either of one type or two or more types.

<Fluorine-containing carbonate compound>

$R^3$ in the formula (2) is a linear fluoroalkyl group.

The number of carbon atoms in $R^3$ is 1 to 3, and is more preferably 1 or 2 for improving the miscibility in the non-aqueous solvent.

The fluoroalkyl group represented by $R^3$ has at least 1 fluorine atom. The upper limit of the number of fluorine atoms of $R^3$ is not particularly limited and may be appropriately set depending on the carbon number of the fluoroalkyl group and the like, but at least one hydrogen atom is preferably left unsubstituted by fluorine. That is, $R^3$ has preferably at least 1 hydrogen atom.

$R^4$ in the formula (2) is a linear alkyl group or a fluoroalkyl group having at least one fluorine atom.

The number of carbon atoms in $R^4$ is 1 to 3, and is more preferably 1 or 2 for improving the miscibility in the non-aqueous solvent.

As $R^4$, an alkyl group having no fluorine atom is preferable.

Among the fluorine-containing carbonate compounds represented by the above formula (2), 2,2-difluoroethyl ethyl carbonate (CAS No. 916678-14-3) is especially preferable.

The fluorine-containing carbonate compound contained in the electrolyte solution of this embodiment may be either of one type or two or more types.

In the electrolyte solution according to this embodiment, the amount of the fluorine-containing compound is preferably 0.5 to 60 % by volume, more preferably 0.8 to 35 % by volume, still more preferably 1 to 10 % by volume, based on the total volume of the electrolyte solution. The total amount of the fluorine-containing compounds that is not less than the above lower limit is effective for forming a film on the surface of the electrode to thereby improve the cycle performance. On the other hand, the total amount of the fluorine-containing compounds that is not more than the above upper limit can secure a sufficient permeation of the electrolyte solution to the separator.

In the electrolyte solution according to this embodiment, the amount of the fluorine-containing compound is preferably 0.5 to 60 % by mass, more preferably 0.8 to 35 % by mass, still more preferably 1 to 10 % by mass, based on the total mass of the electrolyte solution. The total amount of the fluorine-containing compounds that is not less than the above lower limit is effective for forming a film on the surface of the electrode to thereby improve the cycle performance. On the other hand, the total amounts of the fluorine-containing compounds that is not more than the above upper limit can secure a sufficient permeation of the electrolyte solution to the separator.

Each of the fluorine-containing ether compound and the fluorine-containing carbonate compound contained in the electrolyte solution of this embodiment may be either of one type or two or more types.

When the electrolyte solution according to this embodiment contains two or more types of the fluorine-containing compounds, the total amount of the fluorine-containing compounds is preferably 0.5 to 60 % by volume, more preferably 0.8 to 35 % by volume, still more preferably 1 to 10 % by volume, based on the total volume of the electrolyte solution. The total amount of the fluorine-containing compounds that is not less than the above lower limit is effective for forming a film on the surface of the electrode to thereby improve the cycle performance. On the other hand, the total amount of the fluorine-containing compounds that is not more than the above upper limit can secure a sufficient permeation of the electrolyte solution to the separator.

Further, when the electrolyte solution according to this embodiment contains two or more types of the fluorine-containing compounds, the total amount of the fluorine-containing compounds is preferably 0.5 to 60 % by mass, more preferably 0.8 to 35 % by mass, still more preferably 1 to 10 % by mass, based on the total mass of the electrolyte solution. The total amount of the fluorine-containing compounds that is not less than the above lower limit is effective for forming a film on the surface of the electrode to thereby improve the cycle performance. On the other hand, the total amount of the fluorine-containing compounds that is not more than the above upper limit can secure a sufficient permeation of the electrolyte solution to the separator.

<Ionic Liquid>

In the formulae (3) and (4), $X^-$ is an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, among which $PF_6^-$ and $BF_4^-$ are preferable and $PF_6^-$ is more preferable.

$R^5$ in the formulae (3) and (4) represents a hydrogen atom or a hydrocarbon group having 1 to 18 carbon atoms. $R^5$ is preferably a hydrogen atom or a hydrocarbon group having 1 to 16 carbon atoms, and more preferably a hydrogen atom or a hydrocarbon group having 1 to 12 carbon atoms, and still more preferably a hydrogen atom or a hydrocarbon group having 1 carbon atom. The hydrocarbon group as $R^5$ is preferably a linear or branched alkyl group. Specific examples of the alkyl group include a methyl group, an ethyl group, a propyl group, an isopropyl group, a butyl group, a sec-butyl group, an isobutyl group, a tert-butyl group, a pentyl group, a hexyl group, a heptyl group, an octyl group, a nonyl group, and a decyl group, among which a methyl group, an ethyl group, a propyl group, a butyl group, a pentyl group, a hexyl group, a heptyl group, an octyl group, a nonyl group, a decyl group, an undecyl group, and a dodecyl group are preferable. As $R^5$, a hydrogen atom or a methyl group is especially preferable.

When $R^5$ in the formula (4) is a hydrocarbon group, the hydrocarbon group is located at any of ortho, meta and para positions, and is preferably located at an ortho position.

$R^6$ in the formulae (3) and (4) represents a hydrogen atom or a hydrocarbon group having 1 to 18 carbon atoms. $R^6$ is preferably a hydrogen atom or a hydrocarbon group having 2 to 16 carbon atoms, and more preferably a hydrogen atom or a hydrocarbon group having 2 to 12 carbon atoms, and still more preferably a hydrogen atom or a hydrocarbon group having 2 to 6 carbon atoms. The hydrocarbon group as $R^6$ is preferably a linear or branched alkyl group. Specific examples of the alkyl group include a methyl group, an ethyl group, a propyl group, a butyl group, a pentyl group, a hexyl group, a heptyl group, an octyl group, a nonyl group, and a decyl group, an undecyl group, and a dodecyl group, among which a butyl group, a pentyl group, and a hexyl group are preferable.

Especially preferable examples of the Ionic liquid include 1-butyl-2-methylpyridinium hexafluorophosphate, 1-pentyl-2-methylpyridinium hexafluorophosphate, 1-hexyl-2-methylpyridinium hexafluorophosphate, 1-butylpyridinium hexafluorophosphate, 1-pentylpyridinium hexafluorophosphate, and 1-hexylpyridinium hexafluorophosphate.

The ionic liquid contained in the electrolyte solution of this embodiment may be either of one type or two or more types.

In the electrolyte solution of this embodiment, the amount of the ionic liquid is preferably 0.1 to 10 % by volume, and more preferably 0.2 to 5 % by volume, based on the total volume of the electrolyte solution.

The ionic liquid used in an amount not less than the above lower limit is effective for suppressing the gas generation. On the other hand, the ionic liquid used in an amount not more than the above upper limit can secure a sufficient permeation thereof to the separator.

In the electrolyte solution of this embodiment, the amount of the ionic liquid is preferably 0.1 to 10 % by mass, and more preferably 0.2 to 5 % by mass, based on the total mass of the electrolyte solution.

The ionic liquid used in an amount not less than the above lower limit is effective for suppressing the gas generation. On the other hand, the ionic liquid used in an amount not more than the above upper limit can secure a sufficient permeation thereof to the separator.

<Optional Component>

The electrolyte solution of the present embodiment may contain optional component other than the aforementioned non-aqueous solvent, lithium salt, fluorine-containing compound and ionic liquid, as long as the effects of the present invention would not be impaired.

The optional component can be appropriately selected depending on the purpose and is not particularly limited.

<Boron-containing Compound>

The electrolyte solution of the present embodiment may contain, as an optional component, a boron-containing compound represented by the following formula (7):

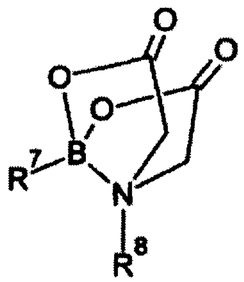

**(7)**

wherein $R^7$ represents an alkyl group having 1 to 4 carbon atoms or an alkenyl group having 2 to 4 carbon atoms, and $R^8$ represents an alkyl group having 1 to 4 carbon atoms.

When $R^7$ in the formula (7) is an alkyl group, this alkyl group is preferably a linear or branched alkyl group and is more preferably a linear alkyl group for suppressing the capacity decrease of the lithium-ion secondary battery occurring through the charge and discharge. The number of carbon atoms of the alkyl group is preferably 1 to 3, and more preferably 1 or 2.

When $R^7$ in the formula (7) is an alkenyl group, the alkenyl group is preferably a vinyl group, a 1-propenyl group or a 2-propenyl group (allyl group), more preferably a vinyl group or an allyl group and still more preferably a vinyl group, for suppressing the capacity decrease of the lithium-ion secondary battery occurring through the charge and discharge.

In the formula (7), $R^8$ is a linear, branched or cyclic alkyl group. For improving the solubility of the boron-containing compound in the non-aqueous solvent, $R^8$ is preferably a linear or branched alkyl group and is more preferably a linear alkyl group.

For improving the solubility of the boron-containing compound in the non-aqueous solvent, the number of carbon atoms in the alkyl group represented by $R^8$ is preferably 1 to 3, is more preferably 1 or 2, and still more preferably 1.

Preferred examples of the boron-containing compound represented by the formula (7) include vinylboronic acid (N-methyliminodiacetic acid) methyl ester, vinyl boronic acid (N-methyliminodiacetic acid) ethyl ester, allylboric acid (N-methyliminodiacetic acid) methyl ester, and allylboric acid (N-methyliminodiacetic acid) ethyl ester. Among these, it is especially preferred to use vinylboronic acid (N-methyliminodiacetic acid) methyl ester represented by the following formula (8) since the capacity decrease of the lithium-ion secondary battery can be further suppressed. The boron-containing compound of the formula (7) contained in the electrolyte solution of this embodiment may be either of one type or two or more types.

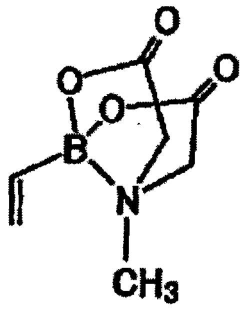

(8)

In the electrolyte solution according to this embodiment, the amount of the boron-containing compound is preferably 0.01 to 5 % by mass, more preferably 0.03 to 1 % by mass, still more preferably 0.06 to 0.5 % by mass.

In the electrolyte solution of this embodiment, the amount of the boron-containing compound is 5 parts by mass or less, more preferably 1 part by mass or less, relative to 100 parts by mass of the fluorine-containing ether compound.

<Preparation of Electrolyte Solution>

The method for preparing the electrolyte solution of this embodiment is not particularly limited as long as the aforementioned non-aqueous solvent, lithium salt, fluorine-containing compound, ionic liquid and, if necessary, optional components can be uniformyl dissolved or dispersed in a mixture thereof, and any conventional methods for preparing an electrolyte solution can be employed.

The electrolyte solution of the present embodiment includes the lithium salt, the fluorine-containing compound and the ionic liquid, whereby a lithium-ion secondary battery including the electrolyte solution suffers less capacity decrease occurring through the repetition of charge/discharge cycle as compared to the conventional batteries even when the working voltage is set at 4.5 V or higher.

⟨⟨Lithium-ion Secondary Battery⟩⟩

The lithium ion secondary battery according to the second aspect of the present invention includes the above electrolyte solution.

The embodiments of the lithium-ion secondary battery with applicable configurations are described below.

For example, the lithium-ion secondary battery of the present embodiment may be configured to include a battery element with cathodes and anodes provided oppositely to each other, and an electrolyte solution, which are accommodated within an outer casing. The shape of the lithium-ion secondary battery is not particularly limited, and may be any of cylindrical type, flattened spiral square type, stacked square type, coin type, flattened spiral laminate type, and stacked laminate type. Among these, a stacked laminate type is preferable. A stacked laminate type lithium-ion secondary battery is explained below as one example of the present embodiment.

FIG. 1 is a schematic cross-sectional view showing the construction of a battery element (electrode element) of a secondary battery of a stacked laminate type. In this electrode element, a plurality of units each including a cathode 1 and an anode 2 which are laminated through with a separator 3 are stacked through a cathode current collector 1A or an anode current collector 2A.

The cathode current collectors 1A of the respective cathodes 1 are electrically connected together by welding the end portions thereof which are not coated with the cathode active material. To the welded portions are further welded cathode lead tabs 1B. The anode current collectors 2A of the respective anodes 2 are electrically connected together by welding the end portions thereof which are not coated with the anode active material. To the welded portions are further welded anode lead tabs 2B.

<Anode>

The anode is formed by binding an anode active material on an anode current collector with an anode binder so as to cover the anode current collector.

Examples of the anode active material include a carbonaceous material (a) capable of storing and releasing lithium ions, a metal (b) capable of being alloyed with lithium, and a metal oxide (c) capable of storing and releasing lithium ions.

As carbonaceous material (a), graphite, amorphous carbon, diamond-like carbon, carbon nanotubes, or a composite thereof can be used. Here, graphite having a high crystallinity has an advantage in that such graphite has a high electroconductivity, and has excellent adhesiveness with an anode current collector formed of a metal such as

copper, and excellent voltage flatness. By contrast, amorphous carbon having a low crystallinity has an advantage in that such amorphous carbon exhibits relatively small volume expansion and, hence, has high effect of alleviating the volume expansion of the anode as a whole, and is unlikely to cause deterioration attributable to nonuniformity such as crystal grain boundaries and crystal defects.

It is also preferable to use carbonaceous materials having different crystallinity in combination. For example, a composite carbon having, on at least part of the surface of highly crystalline carbonaceous particles, a low crystalline (or amorphous) carbonaceous material can be used as the carbonaceous material (a).

As metal (b), Al, Si, Pb, Sn, In, Bi, Ag, Ba, Ca, Hg, Pd, Pt, Te, Zn, La or an alloy of two or more thereof can be used. It is especially preferred that silicon (Si) is contained as metal (b).

Examples of the metal oxide (c) include silicon oxide, aluminum oxide, tin oxide, indium oxide, zinc oxide, lithium oxide, and a composite thereof. Especially, it is preferred that silicon oxide is contained as metal oxide (c) because the silicon oxide is relatively stable and is unlikely to cause reactions with other compounds.

Further, it is preferred that metal oxide (c) is an oxide of the metal used as metal (b).

For improving the electroconductivity of metal oxide (c), other element may be added to the metal oxide (c) in an amount of, for example, from 0.1 to 5 % by mass. The other element is at least one element selected from the group consisting of nitrogen, boron and sulfur.

The whole or a part of metal oxide (c) preferably has an amorphous structure. The metal oxide (c) of an amorphous structure can suppress the volume expansion of the carbonaceous material (a) and the metal (b) as other anode active materials, and can also suppress decomposition of the electrolyte solution containing the fluorine-containing ether compound. The mechanism underlying this effect is not clear, but it is speculated that the metal oxide (c) having an amorphous structure has some influence on the film formation at the interface between carbonaceous material (a) and the electrolyte solution. The amorphous structure is believed to have a relatively low level of factors attributable to nonuniformity such as crystal grain boundary or a crystal defect. The presence of amorphous structure forming the whole or a part of metal oxide (c) can be confirmed by X-ray diffractometry (XRD). Specifically, when the metal oxide (c) has no amorphous structure, a distinct peak unique to the metal oxide (c) is observed, whereas when the whole or a part of metal oxide (c) has an amorphous structure, the peak unique to metal oxide (c) is observed to have a widened broad shape.

The whole or a part of metal (b) is preferably dispersed in metal oxide (c). Dispersing at least a part of metal (b) in the metal oxide (c) can further suppress the volume expansion of the anode as a whole, and can also suppress the decomposition of the electrolyte solution. The whole or a part of metal (b) being dispersed in the metal oxide (c) can be confirmed by the combined use of the transmission electron microscopic (TEM) observation and the energy dispersive X-ray (EDX) spectroscopy. Specifically, by observing the cross-section of a sample containing the metal particle (b) and measuring the oxygen concentration of the metal particle (b) dispersed in the metal oxide (c), it can be confirmed that the metal constituting the metal particle (b) has not turned into an oxide.

An anode active material containing the carbonaceous material (a), the metal (b), and the metal oxide (c) with the whole or a part of the metal oxide (c) having an amorphous structure and the whole or a part of metal (b) being dispersed in the metal oxide (c) can be produced by a conventional method. That is, subjecting the metal oxide (c) to a CVD process in an atmosphere containing an organic gas such as a methane gas can give a composite in which the metal (b) in the metal oxide (c) is made into nanoclusters and is covered on its surface with the carbonaceous material (a). Alternatively, the anode active material can be produced by mixing the carbonaceous material (a), the metal (b) and the metal oxide (c) by mechanical milling.

The respective amounts of the carbonaceous material (a), the metal (b) and the metal oxide (c), based on the total amount of the anode active material, are not particularly limited.

The amount of the carbonaceous material (a) is preferably 2 to 50 % by mass, and more preferably 2 to 30 % by mass, based on the total mass of the carbonaceous material (a), the metal (b) and the metal oxide (c).

The amount of the metal (b) is preferably 5 to 90 % by mass, and more preferably 20 to 50 % by mass, based on the total mass of the carbonaceous material (a), the metal (b) and the metal oxide (c).

The amount of the metal oxide (c) is preferably 5 to 90 % by mass, and more preferably 40 to 70 % by mass, based on the total mass of the carbonaceous material (a), the metal (b) and the metal oxide (c).

Further, the amount of the carbonaceous material (a), based on the total amount of the anode active material, may be 0 %. In such a case, the total amount of the metal (b) and the metal oxide (c) may be 100 % by mass of the anode active material. Further, an anode material consisting only of the metal (b) and the metal oxide (c) may be used instead of the aforementioned anode active material.

The shapes of the carbonaceous material (a), the metal (b) and the metal oxide (c) are not particularly limited, and each of these may be, for example, in the form of particles. In this case, for example, the average particle diameter of the metal (b) may be smaller than the average particle diameters of the carbonaceous material (a) and the metal oxide (c). With such a relationship of average particle diameters, the particle diameter of metal (b) which undergoes less volume change during the charge/discharge cycle is relatively small while the particle diameters of carbonaceous material (a) and metal oxide (c) which undergo large volume change are relatively large; therefore, the formation of dendrite and

minute alloy powder can be more effectively suppressed. Further, lithium is consequently stored in and released from the large-sized particle, the small-sized particle and the large-sized particle in this order in the charge/discharge process, which also contributes to prevention of the residual stress and the residual strain. The average particle diameter of metal (b) may be, for example, 20 μm or less, and is preferably 15 μm or less.

The average particle diameter of metal oxide (c) is preferably 1/2 or less of that of carbonaceous material (a), and the average particle diameter of metal (b) is preferably 1/2 or less of that of metal oxide (c). It is more preferable that not only is the average particle diameter of metal oxide (c) 1/2 or less of that of carbonaceous material (a), but also the average particle diameter of metal (b) is 1/2 or less of that of metal oxide (c). Controlling the average particle diameters within such ranges makes it possible to achieve more efficiently the effect of alleviating the volume expansion of the metal and the alloy phase, and to obtain a secondary battery that has excellent balance of energy density, cycle life and efficiency. More specifically, it is preferable that the average particle diameter of metal oxide (c) is 1/2 or less of that of carbonaceous material (a), and the average particle diameter of metal (b) is 1/2 or less of that of metal oxide (c). More specifically, the average particle diameter of metal (b) may be, for example, 20 μm or less, and preferably 15 μm or less.

The average particle diameter can be measured by the laser diffraction scattering method.

Examples of the anode binder include polyvinylidene fluoride, polytetrafluoroethylene, vinylidene fluoride-hexafluoropropylene copolymer, vinylidene fluoride-tetrafluoroethylene copolymer, a styrene-butadiene copolymer rubber, polypropylene, polyethylene, polyimide, polyamide-imide, and polyethylene oxide. Of these, polyimide and polyamide-imide are preferred from the viewpoint of strong adhesiveness. The amount of the anode binder is preferably 5 to 25 parts by mass, relative to 100 parts by mass of the anode active material, from the viewpoint of balancing the requirements for "sufficient binding force" and "higher energy", which are in a tradeoff relationship.

As the anode current collector, for example, metals such as aluminum, nickel, copper and silver, and alloys thereof can be used. The shape of the anode current collector is not particularly limited, and examples thereof includes a foil, a plate-shape and a mesh-shape.

As a method for producing the anode, there can be a method in which an anode active material layer containing the anode active material and the anode binder is formed on the anode current collector.

(段下げ) The anode active material layer can be formed, for example, by a doctor blade method, a die coater method, or the like.

The anode current collector may be a thin film of aluminum, nickel or an alloy thereof, which is formed on the anode active material layer formed on an appropriate supporting body, wherein the thin film is formed by a method such as vapor deposition or sputtering. The thin film can be formed, for example, by CVD method, sputtering, or the like.

<Cathode>

The cathode is formed, for example, by binding a cathode active material on a cathode current collector with a cathode binder so as to cover the cathode current collector.

Examples of the cathode active material include a lithium manganate having a layered structure or a lithium manganate having a spinel structure, such as $LiMnO_2$ and $Li_xMn_2O_4$($0<x<2$); $LiCoO_2$, $LiNiO_2$, and materials in which a part of the transition metal thereof is replaced by another metal; lithium transition metal oxides such as $LiNi_{1/3}Co_{1/3}Mn_{1/3}O_2$, in which the molar amount of a specific transition metal does not exceed a half of the total molar amount of the transition metals; and materials which contain lithium in an excess amount relative to the stoichiometric amount in these lithium transition metal oxides. Of these, particularly preferred are $Li_\alpha Ni_\beta Co_\gamma Al_\delta O_2$ ($1 \leqq \alpha \leqq 1.2$, $\beta + \gamma + \delta = 1$, $\beta \geqq 0.7$, $\gamma \leqq 0.2$) and $Li_\alpha Ni_\beta Co_\gamma Mn_\delta O_2$($1 \leqq \alpha \leqq 1.2$, $\beta + \gamma + \delta = 1$, $\beta \geqq 0.6$, $\gamma \leqq 0.2$). With respect to the cathode active material, a single type thereof may be used individually or two or more types thereof may be used in combination.

As the cathode binder, the same as mentioned above for the anode can be used. Polyvinylidene fluoride is preferable from the viewpoint of versatility and low cost. The amount of the cathode binder is preferably 2 to 10 parts by mass, relative to 100 parts by mass of the cathode active material, from the viewpoint of balancing the requirements for "sufficient binding force" and "higher energy", which are in a tradeoff relationship.

As the cathode current collector, for example, metals such as aluminum and copper, and alloys thereof can be used.

An electroconductive auxiliary material may be added to the cathode active material layer containing the cathode active material in order to reduce impedance. Examples of the electroconductive auxiliary material include carbonaceous microparticles of graphite, carbon black, acetylene black and Ketjenblack.

<Separator>

As the aforementioned separator, porous films or non-woven fabrics of polypropylene, polyethylene or the like can be used. A laminate of any of such porous films or non-woven fabrics can also be used as the separator.

<Outer packaging material>

The outer packaging material can be appropriately selected as long as it is stable against an electrolyte solution and it has a sufficient water vapor barrier property.

For example, in the case of a lithium-ion secondary battery of a stacked laminate type, a lamination film of polypropylene, polyethylene or the like which is coated with aluminum or silica is preferably used as an outer packaging material. Particularly, it is preferable to use an aluminum lamination film from the viewpoint of suppression of volume expansion.

In the lithium-ion secondary battery of the present embodiment, the electrolyte solution contained therein enables the battery to suppress the capacity decrease thereof occurring through the repetition of charge/discharge cycle as compared to the conventional batteries even when the working voltage is set at 4.5 V or higher. Further, according to the lithium-ion secondary battery of the present embodiment, since the decrease of capacity of the battery occurring through the repetition of charge/discharge cycle is suppressed as compared to the conventional batteries even when the battery is used at a high voltage, i.e., 4.5 V or higher, the battery can be used repeatedly as a high energy density secondary battery over a long period of time as compared to the conventional batteries.

Examples

Hereinbelow, the present invention will be described with reference to Examples and Comparative Examples which, however, should not be construed as limiting the present invention.

[Example 1]

A laminate lithium-ion secondary battery having a structure as shown in FIG. 1 was manufactured.

<Anode>

A slurry containing 69 % by mass of SiO having an average particle size of 1μm, 15 % by mass of polyamic acid, 10 % by mass of acetylene black, and 6 % by mass of carbon nanotube was coated on an anode current collector 2A formed of a copper foil having a thickness of 15 μm, followed by drying, to produce an anode 2 having a thickness of 25 μm. The produced anode was annealed in argon atmosphere at 300 °C for 2 hours, to thereby cure the polyamic acid.

<Cathode>

A slurry containing 90 % by mass of a ternary cathode material $LiNi_{0.33}Mn_{0.33}Co_{0.33}O_2$ as the cathode active material, 5 % by mass of Ketjen black as an electroconductive auxiliary material, and 5 % by mass of polyvinylidene fluoride as a binder was coated on a cathode current collector 1A (thickness: 10 μm) formed of an aluminum foil, to thereby form a coating, which was then dried to prepare a cathodes 1 having a thickness of 50 μm. Similarly, a double-sided electrode was produced, which includes a cathode current collector 1A having cathodes 1 formed on both sides thereof by the application and drying of the slurry.

<Electrolyte Solution>

Into a solvent (A) containing ethylene carbonate (EC) and diethyl carbonate (DEC) as nonaqueous solvents in a volume ratio of 30:70 was dissolved a lithium hexafluorophosphate ($LiPF_6$) as supporting salt (B) so as to give a concentration of 1 mol/L with respect to the solvent (A), followed by addition of an ionic liquid (C) represented by the following formula (9) in an amount of 1 % by mass with respect to the total mass of (A) + (B).

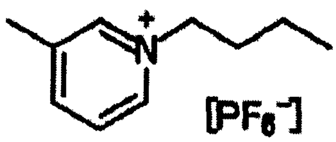

(9)

<Manufacture of Lithium-ion Secondary Battery>

The produced cathode and anode were formed into predetermined shapes, and laminated through a porous film separator. Then, a cathode lead tab 1B formed of an Al plate and an anode lead tab 2B formed of a Ni plate were

respectively welded to the laminate, thereby producing a battery element. The battery element was covered with an outer casing 4 formed of an aluminum laminate film, and the resulting was heat sealed at three sides. Then, the battery element was impregnated with the aforementioned electrolyte solution at an appropriate degree of vacuum. Thereafter, the remaining side of the outer casing 4 was heat sealed to obtain a lithium-ion secondary battery prior to activation treatment.

<Activation treatment step>

The manufactured lithium-ion secondary battery prior to activation treatment was charged with a current of 20 mA per 1 g of the cathode active material to 4.5V and discharged with the same current of 20 mA per 1 g of the cathode active material to 1.5V. This cycle of charge and discharge was repeated twice. Then, the seal of the outer casing was broken at one side thereof and the inside of the battery was degassed under reduced pressure. The outer casing was sealed again to produce a lithium-ion secondary battery of Example 1 according to the present invention.

[Example 2]

A lithium-ion secondary battery according to the present invention was prepared in the same manner as in Example 1, except that a solvent including ethylene carbonate (EC) and diethyl carbonate (DEC) as nonaqueous solvents, and 1,1,2,3,3,3-hexafluoropropyl difluoromethyl ether as an additive, which were present at a volume ratio of 27 : 68 : 5, was used as the solvent (A).

[Example 3]

A lithium-ion secondary battery according to the present invention was prepared in the same manner as in Example 1, except that a solvent including ethylene carbonate (EC) and diethyl carbonate (DEC) as nonaqueous solvents, and 2,2-difluoroethyl ethyl carbonate as an additive, which were present at a volume ratio of 36 : 32 : 32, was used as the solvent (A).

[Example 4]

A lithium-ion secondary battery according to the present invention was prepared in the same manner as in Example 1, except that a solvent including ethylene carbonate (EC) and diethyl carbonate (DEC) as nonaqueous solvents, and 2,2-difluoroethyl ethyl carbonate as an additive, which were present at a volume ratio of 28.5 : 66.5 : 5, was used as the solvent (A).

[Example 5]

A lithium-ion secondary battery according to the present invention was prepared in the same manner as in Example 4, except that an ionic liquid (C) represented by the following formula (10) was used.

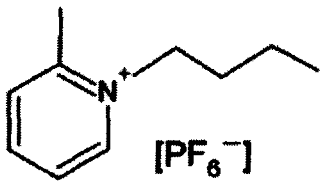

(10)

[Example 6]

A lithium-ion secondary battery according to the present invention was prepared in the same manner as in Example 1, except that an ionic liquid (C) represented by the following formula (10) was used in an amount of 5 % by mass respect to the total mass of (A) + (B), and that lithium cobaltate was used as the cathode active material.

[Example 7]

A lithium-ion secondary battery according to the present invention was prepared in the same manner as in Example 5, except that lithium cobaltate was used as the cathode active material.

[Comparative Example 1]

A lithium-ion secondary battery was prepared in the same manner as in Example 1, except that an electrolyte solution was prepared without using the ionic liquid represented by the formula (9).

[Comparative Example 2]

A lithium-ion secondary battery was prepared in the same manner as in Example 1, except that an electrolyte solution was prepared without using the ionic liquid represented by the formula (9).

[Comparative Example 3]

A lithium-ion secondary battery was prepared in the same manner as in Example 3, except that an electrolyte solution was prepared without using the ionic liquid represented by the formula (9).

[Comparative Example 4]

A lithium-ion secondary battery was prepared in the same manner as in Example 4, except that an electrolyte solution was prepared without using the ionic liquid represented by the formula (9).

[Comparative Example 5]

A lithium-ion secondary battery was prepared in the same manner as in Example 6, except that an electrolyte solution was prepared without using the ionic liquid represented by the formula (10).

[Comparative Example 6]

A lithium-ion secondary battery was prepared in the same manner as in Example 7, except that an electrolyte solution was prepared without using the ionic liquid represented by the formula (10).

The ratios of components in Examples 1 to 7 and Comparative Examples 1 to 6 are as shown in Table 1.

[Table 1]

| | Electrolyte solution | | | Cathode active material |
|---|---|---|---|---|
| | (A): Non-aqueous solvent, fluorine-containing ether compound, fluorine-containing carbonate compound (volume ratio) | (B): Concentration of lithium salt (mole/L) with respect to (A) | (C): Concentration of ionic liquid (% by mass) with respect to (A) + (B) | |
| Ex.1 | EC/DEC = 30 : 70 | $LiPF_6$ (1mol/L) | Formula (9) 1% | $LiNi_{0.33}Mn_{0.33}CO_{0.33}O_2$ |
| Ex.2 | EC/DEC/ 1,1,2,3,3,3-hexafluoropropyl difluoromethyl ether = 27 : 68 : 5 | $LiPF_6$ (1mol/L) | Formula (9) 1% | $LiNi_{0.33}Mn_{0.33}CO_{0.33}O_2$ |
| Ex.3 | EC/DEC/ 2,2-difluoroethyl ethyl carbonate = 36 : 32 : 32 | $LiPF_6$ (1 mol/L) | Formula (9) 1% | $LiNi_{0.33}Mn_{0.33}CO_{0.33}O_2$ |
| Ex.4 | EC/DEC/2,2-difluoroethyl ethyl carbonate = 28.5 : 66.5 : 5 | $LiPF_6$ (1 mol/L) | Formula (9) 1 % | $LiNi_{0.33}Mn_{0.33}CO_{0.33}O_2$ |
| Ex.5 | EC/DEC/2,2-difluoroethyl ethyl carbonate = 28.5 : 66.5 : 5 | $LiPF_6$ (1mol/L) | Formula (10) 1% | $LiNi_{0.33}Mn_{0.33}CO_{0.33}O_2$ |
| Ex.6 | EC/DEC = 30 : 70 | $LiPF_6$ (1 mol/L) | Formula (10) 1% | Lithium cobaltate |
| Ex.7 | EC/DEC/2,2-difluoroethyl ethyl carbonate = 28.5 : 66.5 : 5 | $LiPF_6$ (1mol/L | Formula (10) 1% | Lithium cobaltate |
| Comp.Ex. 1 | EC/DEC = 30 : 70 | $LiPF_6$ (1mol/L) | None | $LiNi_{0.33}Mn_{0.33}CO_{0.33}O_2$ |

(continued)

| | Electrolyte solution | | | Cathode active material |
|---|---|---|---|---|
| | (A): Non-aqueous solvent, fluorine-containing ether compound, fluorine-containing carbonate compound (volume ratio) | (B): Concentration of lithium salt (mole/L) with respect to (A) | (C): Concentration of ionic liquid (% by mass) with respect to (A) + (B) | |
| Comp.Ex. 2 | EC/DEC/ 1,1,2,3,3,3-hexafluoropropyl difluoromethyl ether = 27: 68 : 5 | $LiPF_6$ (1 mol/L) | None | $LiNi_{0.33}Mn_{0.33}CO_{0.33}O_2$ |
| Comp.Ex. 3 | EC/DEC/ 2,2-difluoroethyl ethyl carbonate = 36 : 32 : 32 | $LiPF_6$ (1mol/L) | None | $LiNi_{0.33}Mn_{0.33}CO_{0.33}O_2$ |
| Comp.Ex. 4 | EC/DEC/2,2-difluoroethyl ethyl carbonate = 28.5 : 66.5 : 5 | $LiPF_6$ (1 mol/L) | None | $LiNi_{0.33}Mn_{0.33}CO_{0.33}O_2$ |
| Comp.Ex. 5 | EC/DEC = 30 : 70 | $LiPF_6$ (1 mol/L) | None | Lithium cobaltate |
| Comp.Ex. 6 | EC/DEC/2,2-difluoroethyl ethyl carbonate = 28.5 : 66.5 : 5 | $LiPF_6$ (1 mol/L) | None | Lithium cobaltate |

<Method for Evaluation of lithium-ion secondary battery>

The manufactured lithium-ion secondary battery was charged with a constant current of 40 mA per 1 g of the cathode active material in a thermostatic chamber having a temperature of 45 °C to 4.5V and continued to be charged at a constant voltage of 4.5 V until the current became 5 mA per 1 g of the cathode active material. Then, the battery was discharged with a current of 5 mA per 1 g of the cathode active material to 1.5 V and the initial capacity was determined. After the determination of the initial capacity, the lithium-ion secondary battery was charged with a constant current of 40 mA per 1 g of the cathode active material in a thermostatic chamber having a temperature of 45 °C to 4.5V and continued to be charged at a constant voltage of 4.5 V until the current became 5 mA per 1 g of the cathode active material. Then, the battery was discharged with a current of 40 mA per 1 g of the cathode active material to 1.5 V. This cycle of charge and discharge was repeated 100 times. Then, the capacity retention was determined in terms of a ratio of the initial capacity at the 1st cycle (unit : mAh/g) and the discharge capacity at the 50th and 100th cycle (unit : mAh/g).

In addition, the amount (g) of gas generated from the lithium-ion secondary battery during the cycle test was measured by the Archimedes method in the following manner.

Here, the weight of the lithium-ion secondary battery before the cycle test is A (g), the weight of the lithium-ion secondary battery before the cycle test which has been immersed in water at 25 °C is A ’(g), the weight of the lithium-ion secondary battery after the cycle test is B (g), and the weight of the lithium-ion secondary battery after the cycle test which has been immersed in water at 25 °C is B ’(g). The amount (g) of gas generated from the lithium-ion secondary battery was calculated by the following formula ($\alpha$).

$$\text{Amount of generated gas} = (B - B') - (A - A') \qquad (\alpha)$$

The results of the evaluations of the capacity retention after the charge/discharge cycles and the amount of generated gas are shown in Table 2.

[Table 2]

| | Capacity retention (%) | | | Amount of gas generated (ml) |
|---|---|---|---|---|
| | After 1st cycle | After 50th cycle | After 100th cycle | |
| Ex.1 | 100 | 89 | 75 | 1 |
| Ex.2 | 100 | 89 | 80 | 2 |
| Ex.3 | 100 | 91 | 85 | 0.8 |

(continued)

| | Capacity retention (%) | | | Amount of gas generated (ml) |
|---|---|---|---|---|
| | After 1st cycle | After 50th cycle | After 100th cycle | |
| Ex.4 | 100 | 93 | 87 | 1.2 |
| Ex.5 | 100 | 95 | 91 | 0.6 |
| Ex.6 | 100 | 87 | 74 | 1.5 |
| Ex.7 | 100 | 93 | 86 | 1 |
| Comp.Ex.1 | 100 | 71 | 48 | 12 |
| Comp.Ex.2 | 100 | 80 | 63 | 8 |
| Comp.Ex.3 | 100 | 82 | 65 | 7 |
| Comp.Ex.4 | 100 | 79 | 61 | 10 |
| Comp.Ex.5 | 100 | 61 | 31 | 22 |
| Comp.Ex.6 | 100 | 76 | 53 | 15 |

The above results clearly show that, even when the voltage at the time of discharge was set to 4.5 V which is a potential higher than the conventional voltage, the lithium-ion secondary batteries of Examples 1 to 7 are superior in capacity retention to the lithium-ion secondary batteries of Comparative Examples 1 to 6 and, particularly, exhibit remarkably excellent capacity retention at the 100th cycle.

Further, it has also been found that the lithium-ion secondary batteries of Examples 1 to 7 suffer less generation of gas than the lithium-ion secondary batteries of Comparative Examples 1 to 6.

Industrial Applicability

The present invention is applicable in the field of a lithium-ion secondary battery.

Reference Signs List

1 Cathode
1A Cathode current collector
1B Lead tab for cathode
2 Anode
2A Anode current collector
2B Lead tab for anode
3 Porous separator
4 Outer casing

## Claims

**1.** An electrolyte solution comprising: a non-aqueous solvent; a lithium salt; at least one fluorine-containing compound selected from the group consisting of a fluorine-containing ether compound represented by formula (1) below and a fluorine-containing carbonate compound represented by formula (2) below; at least one of an ionic liquid represented by formula (3) below and an ionic liquid represented by formula (4) below:

$$R^1\text{-O-}R^2 \qquad (1)$$

wherein $R^1$ represents a fluoroalkyl group having 3 to 8 carbon atoms and at least 6 fluorine atoms, and $R^2$ represents a fluoroalkyl group selected from the group consisting of $-CF_3$, $-CHF_2$ and $-CH_2F$;

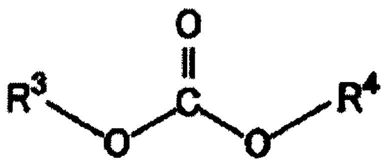

(2)

wherein $R^3$ represents a fluoroalkyl group having 1 to 3 carbon atoms and at least one fluorine atom, and $R^4$ represents an alkyl group having 1 to 3 carbon atoms or a fluoroalkyl group having 1 to 3 carbon atoms and at least one fluorine atom;

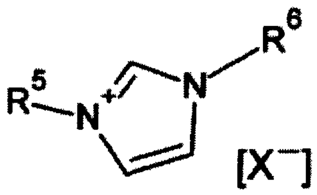

(3)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and each of $R^5$ and $R^6$ independently represents a hydrogen atom or a monovalent hydrocarbon group having 1 to 18 carbon atoms; and

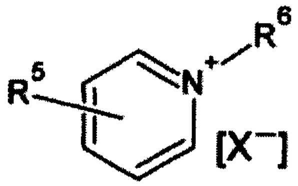

(4)

wherein $X^-$ represents an anion selected from the group consisting of $PF_6^-$, $BF_4^-$, $NO_3^-$, $(C_2F_5)_3PF_3^-$, $N(SO_2CF_3)_2^-$, $CF_3SO_3^-$, $C_4F_9SO_3^-$, $CH_3SO_3^-$, $CH_3C_6H_4SO_3^-$, $B(CN)_4^-$, $N(CN)_2^-$, $C(CN)_3^-$, $SCN^-$, $HSO_4^-$, $CH_3SO_4^-$, $C_2H_5SO_4^-$, $C_4H_9SO_4^-$, $C_6H_{13}SO_4^-$, $C_8H_{17}SO_4^-$, $C_5H_{11}O_2SO_4^-$, $B(C_2O_4)_2^-$, $CH_3COO^-$, $CF_3COO^-$, $Cl^-$, $Br^-$ and $I^-$, and each of $R^5$ and $R^6$ independently represents a hydrogen atom or a hydrocarbon group having 1 to 18 carbon atoms, and is located at any of ortho, meta and para positions when $R^5$ is a hydrocarbon group.

**2.** The electrolyte solution according to claim 1, wherein the amount of the at least one fluorine-containing compound is 0.5 to 60 % by volume, based on the total volume of the electrolyte solution.

**3.** The electrolyte solution according to claim 1, wherein the amount of the at least one fluorine-containing compound is 0.5 to 60 % by mass, based on the total mass of the electrolyte solution.

**4.** The electrolyte solution according to claim 1 or 2, wherein the amount of the ionic liquid is 0.1 to 10 % by volume, based on the total volume of the electrolyte solution.

**5.** The electrolyte solution according to claim 1 or 3, wherein the amount of the ionic liquid is 0.1 to 10 % by mass, based on the total mass of the electrolyte solution.

**6.** The electrolyte solution according to any one of claims 1 to 5, wherein the non-aqueous solvent is a mixed solvent comprising at least two of ethylene carbonate, dimethyl carbonate, diethyl carbonate, and ethyl methyl carbonate.

**7.** The electrolyte solution according to any one of claims 1 to 6, wherein the fluorine-containing ether compound is 1,1,2,3,3,3-hexafluoropropyl difluoromethyl ether.

**8.** The electrolyte solution according to any one of claims 1 to 7, wherein the fluorine-containing ether compound is 2,2-difluoroethyl ethyl carbonate.

**9.** The electrolyte solution according to any one of claims 1 to 8, wherein the ionic liquid is represented by the formula (4), wherein $R^5$ is a hydrogen atom or a methyl group.

**10.** The electrolyte solution according to any one of claims 1 to 9, wherein the ionic liquid is represented by the formula (4), wherein the hydrocarbon group $R^5$ is an ortho-substituent.

**11.** The electrolyte solution according to any one of claims 1 to 10, wherein the ionic liquid is represented by the formula (4), wherein $R^6$ is a hydrogen atom or a hydrocarbon group having 4 to 6 carbon atoms.

**12.** A lithium-ion secondary battery comprising the electrolyte solution of any one of claims 1 to 11.

FIG. 1

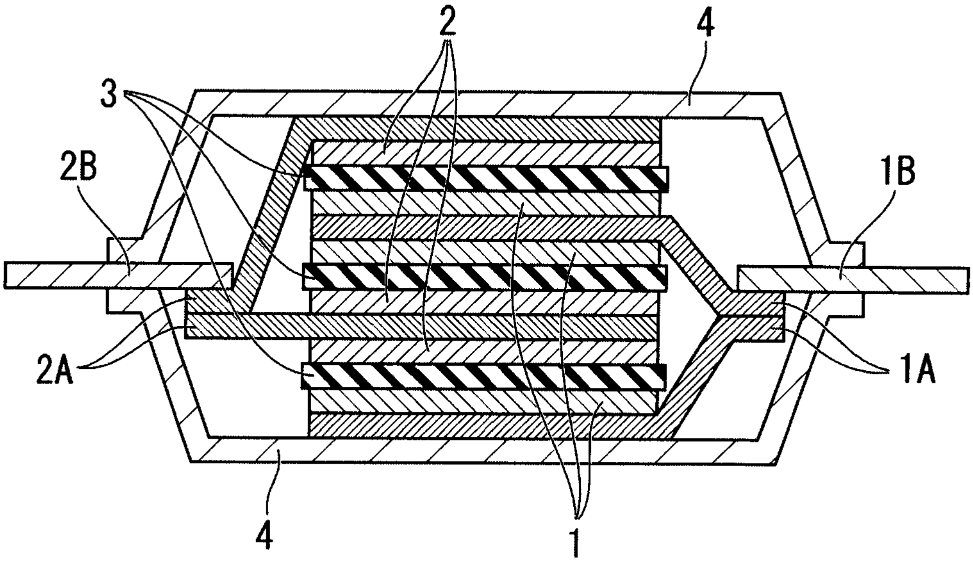

## INTERNATIONAL SEARCH REPORT

International application No.
PCT/JP2016/075323

A. CLASSIFICATION OF SUBJECT MATTER
*H01M10/0567*(2010.01)i, *H01G11/06*(2013.01)i, *H01G11/60*(2013.01)i, *H01G11/62*(2013.01)i, *H01G11/64*(2013.01)i, *H01M10/052*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/0567, H01G11/06, H01G11/60, H01G11/62, H01G11/64, H01M10/052, H01M10/0568, H01M10/0569

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
JSTPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-34050 A (Samsung SDI Co., Ltd.),<br>12 February 2010 (12.02.2010),<br>claims 1, 5, 12<br>& US 2010/0028785 A1<br>claims 1, 5, 12<br>& EP 2151882 A1 | 1-6,8-12<br>7 |
| A | JP 2011-129352 A (Nissan Motor Co., Ltd.),<br>30 June 2011 (30.06.2011),<br>(Family: none) | 1-12 |
| A | JP 2013-197535 A (Daikin Industries, Ltd.),<br>30 September 2013 (30.09.2013),<br>(Family: none) | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 October 2016 (07.10.16) | 18 October 2016 (18.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/075323

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-26608 A (Semiconductor Energy Laboratory Co., Ltd.), 05 February 2015 (05.02.2015), & US 2014/0377644 A1 | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015171505 A
- JP 2015219955 A
- JP 2013026180 A


### Non-patent literature cited in the description


- *CHEMICAL ABSTRACTS,* 916678-14-3